# EUROPEAN PATENT APPLICATION

(11) **EP 3 560 676 A1**
(43) Date of publication of application: **30.10.2019**
(21) Application number: 18000398.0
(22) Date of filing: 25.04.2018
(51) Int. Cl.: B29C 45/17, B60R 9/04, B29L 31/30, B29L 31/00

(54) **PRODUCTION METHOD OF A ROOF BOX AND ROOF BOX STRUCTURE**

(71) Applicant: FORMOSA SAINT JOSE CORPORATION, 106, Taipei (TW)
(72) Inventor: Yang, Ming-Shun, Taipeh 106 (TW)
(74) Representative: Jungblut & Seuss

(57) **Abstract**

The present invention discloses a production method of blow molding a roof box and the structure of a blow molded roof box. The production method includes the following process steps: providing a blow mold, injecting material and blowing, forming a roof box, and forming an access gate. The blow molding roof box includes a roof box (30) formed by blow molding and at least one roof box door (60). With the implementation of the present invention, the blow molding roof box (30) is firmly constructed and waterproof; no fastening parts are required for fastening the top cover to the lower base, with a budget saving advantage; it is also light weight for easy operating even by a single person and capable of preventing separation of the structure to ensure the safety of driving a vehicle with the roof box (30) on top of it.

## Description

### Field of the Invention

The present invention relates to a production method of a roof box and a roof box structure, and more particularly, to a production method of blow molding roof box and a roof box structure formed by a production method of blow molding.

### Background of the Invention

As cars are in wide use nowadays, consumers' demand for roof box is continuously increasing. However, as a variety of roof boxes being made, only the outlooks or decoration being changed, the basic structure nature of roof boxes is still essentially a combination of a top cover and a lower base.

That is to say, every known existing roof boxes in the market or being used is basically a top cover combined to a lower base with several fastener parts, that results in the enormously weight and thickness requiring for ensuring the strength of the structure, the susceptibility of separation or damage by wind when driving, and the susceptibility of the contents of roof boxes being damaged by water leakage.

What is more, the weight of the known roof boxes is so high that it being very much difficult or hardly to access by one single person, either to instore or to operate on the car top.

Accordingly, it is imperative to provide a production method of blow molding roof box or a roof box structure which is capable of being effectively formed by light material without a windward joint portion, strong structural force and water proof, easily operable by one single person in instore or remove, and most importantly, to prevent the roof box from been separated by wind when driving, and thus meets automakers' progress and expectations in terms of low costs, high efficiency and safety.

### Summary of the Invention

The present invention discloses a production method of blow molding roof box and a blow molding roof box structure. The production method includes the following process steps: providing a blow mold, injecting material and blowing, forming a roof box and forming access gate. The blow molding roof box structure includes a roof box formed with blow molding and at least one roof box door. With the implementation of the present invention, the blow molding roof box is firmly constructed and waterproof without combining portion; no fastening parts required with budget saving advantage; light weight for easy operating even by a single person; and capable of preventing separation of the upper and lower parts to ensure the safety of driving of a vehicle with a roof box on car top.

The present invention provides a production method of blow molding roof box, comprising the following process steps: providing a blow mold, wherein the blow mold being a openable 3 dimensional blow mold having a material inlet and a blow inlet; injecting material and blowing, wherein a plastic material being injected through the material inlet into the blow mold, and then a fluid being injected or blown into the blow mold to make the plastic material being evenly distributed upon the inner surface of the blow mold; forming a roof box, wherein the plastic material evenly distributed on the inner surface of the blow mold being cooled and fetched out the blow mold and forming a roof box; and forming access gate, wherein at least one access gate being formed by cutting on at least one side of the roof box.

The present invention also provides a blow molding roof box structure, comprising: a roof box formed by a production method of blow molding, wherein at least one access gate is formed by cutting on at least one side of the roof box; and at least one roof box door, wherein a roof box door being openably combined and attached to each access gate.

The implementation of the invention may at least achieve the following improvements:
(1) Being without a windward joint portion, strong structural force and water proof.
(2) Being not a top cover + lower base structure, preventing the roof box from been separated by wind when driving to ensure the safety of driving of a vehicle with the roof box on car top.
(3) Strong structural force being effectively formed by light material, operable by only one single person.
(4) Requiring no fastening parts.
(5) Reducing enormously the production cost and the material cost

The detailed features and advantages of the invention are described in the detailed description of the invention for those skilled in the art to understand, make, and use the invention and to easily understand the purposes and advantages of the invention according to the detailed description, claims, and drawings.

### Brief Description of the Drawings

The invention as well as a preferred mode of use, further objectives and advantages thereof will be best understood by reference to the following detailed description of illustrative embodiments when read in conjunction with the accompanying drawings, wherein:
FIG. 1 is a process step diagram of a production method of blow molding roof box according to an embodiment of the present invention.
FIG. 2A is a schematic three-dimensional view of a blow mold according to an embodiment of the present invention.
FIG. 2B is another schematic three-dimensional view of a blow mold according to an embodiment of the present invention.
FIG. 2C is a schematic view of a blow mold being blown from the blow inlet to make the plastic material being evenly distributed upon the inner surface of the blow mold according to an embodiment of the present invention.
FIG. 3A is a schematic three-dimensional view of a blow molding roof box according to an embodiment of the present invention.
FIG. 3B is a schematic three-dimensional view of a blow molding roof box with access gate according to an embodiment of the present invention.
FIG. 3C is another schematic three-dimensional view of a blow molding roof box with access gate according to an embodiment of the present invention.
FIG. 4A is a process step diagram of a production method of blow molding roof box further comprises a process step of forming water guiding groove according to an embodiment of the present invention.
FIG. 4B is a schematic three-dimensional view of a blow molding roof box formed by the process step of FIG. 4A according to an embodiment of the present invention.
FIG. 4C is a process step diagram of a production method of blow molding roof box further comprises a process step of forming a roof box door according to an embodiment of the present invention.
FIG. 5A is a process step diagram of a production method of blow molding roof box further comprises a process step of forming water guiding groove and a process step of forming a roof box door according to an embodiment of the present invention.
FIG. 5B is a schematic three-dimensional view of a blow molding roof box formed by the process step of FIG. 5A according to an embodiment of the present invention.
FIG. 5C is a schematic three-dimensional view of a blow molding roof box with the access gate being sealed by the roof box door according to an embodiment of the present invention.
FIG. 6A is a schematic three-dimensional view of a blow molding roof box with a link lock according to an embodiment of the present invention.
FIG. 6B is a schematic three-dimensional view of a blow molding roof box with the roof box door being locked on roof box over the access gate with a link lock according to an embodiment of the present invention.
FIG. 7A is a schematic three-dimensional view of a blow molding roof box with at least one reinforcing rib being formed on the bottom side of the roof box according to an embodiment of the present invention.
FIG. 7B is a schematic three-dimensional view of a roof box door being with an air pump and being connected with a link lock according to an embodiment of the present invention.
FIG. 8A is a schematic three-dimensional view of a blow molding roof box with the roof box door being antop opening roof box door according to an embodiment of the present invention.
FIG. 8B is a schematic three-dimensional view of a blow molding roof box with the roof box door being an below opening roof box door according to an embodiment of the present invention.
FIG. 8C is a schematic three-dimensional view of a blow molding roof box with the roof box door being an sidewise opening roof box door according to an embodiment of the present invention.
FIG. 9 is a schematic three-dimensional view of a blow molding roof box according to an embodiment of the present invention.
FIG. 10 is a schematic three-dimensional view of a blow molding roof box further comprises at least one water guiding groove according to an embodiment of the present invention.
FIG. 11 is another schematic three-dimensional view of a blow molding roof box with the roof box door being locked on roof box over the access gate with a link lock according to an embodiment of the present invention.
FIG. 12A is a schematic three-dimensional view of a blow molding roof box with at least one reinforcing rib being formed on the bottom side of the blow molding roof box according to an embodiment of the present invention.
FIG. 12B is a schematic three-dimensional view of a blow molding roof box with at least one reinforcing rib and at least one water guiding groove according to an embodiment of the present invention.

### Detailed Description of the Invention

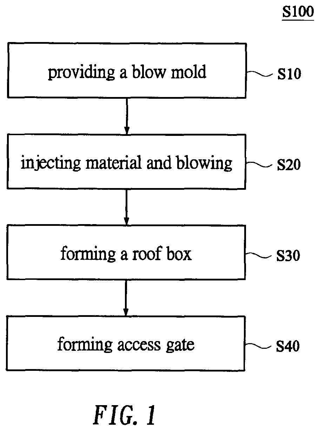

Please refer to FIG. 1, in an embodiment of the present invention, a production method of blow molding roof box S100, comprises the following steps: providing a blow mold (step S10), injecting material and blowing (step S20), forming a roof box (step S30), and forming access gate (step S40).

As shown in FIG. 1, Fig. 2A, FIG. 2B and FIG. 3A, providing a blow mold (step S10), wherein the blow mold 10 being an openable three-dimensional blow mold used to make roof box 30, and the blow mold 10 having a material inlet 21 and a blow inlet 22.

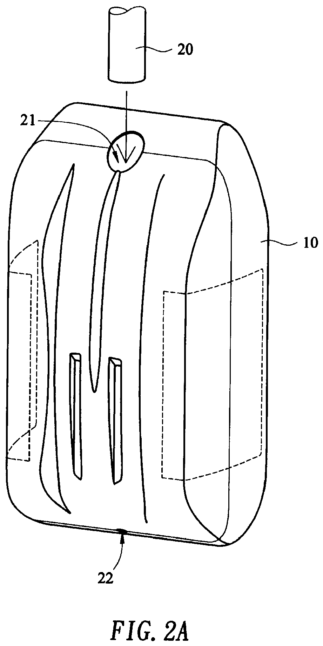

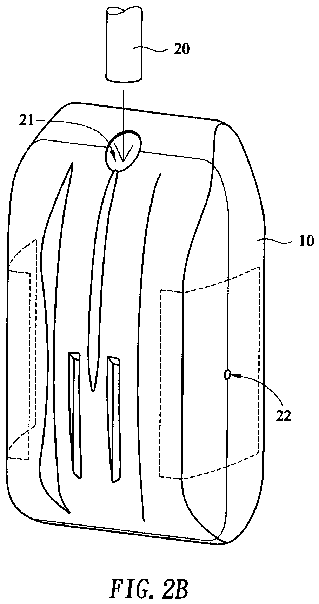

As shown in FIG. 1, Fig. 2A and FIG. 2B, the material inlet 21 of the blow mold 10 can be formed on one of the short sides of the blow mold 10. The material injected from the material inlet 21 can also be filled from top when the material inlet is on the top side.

As also shown in FIG. 2A and FIG. 2B, the blow inlet 22 can be formed on any side of the blow mold 10, the blow inlet 22 is on the same side with the material inlet 21 in an of the embodiment.

Please refer to FIG. 1, FIG. 2A, FIG. 2B, FIG. 2C and FIG. 3A, injecting material and blowing (step S20), wherein a plastic material 20 being injected through the material inlet 21 into the blow mold 10, and then a fluid being injected or blown into the blow mold 10 from the blow inlet 22 to make the plastic material 20 being evenly distributed upon the inner surface of the blow mold 10.

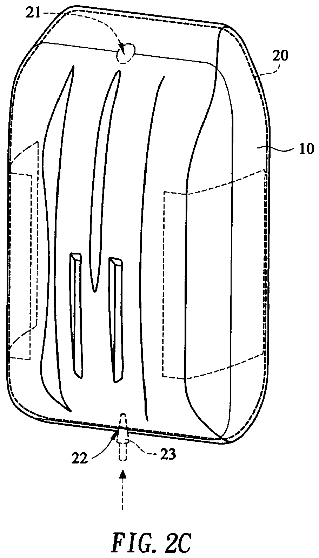

As shown in FIG. 2C, when in the process step injecting material and blowing (step S20), the material inlet 21 is closed after the plastic material 20 is injected into the blow mold 10 and the blow mold 10 is closed, preventing the plastic material 20 from being spread out from the material inlet 21. The blowing of the plastic material 20 can be a blow of air, gas or fluid by a blow pin 23 through the blow inlet 22, the blow pin 23 also blocks the blow inlet 22 at the same time to prevent the plastic material 20 from leaking out the blow inlet 22.

As also shown in FIG. 2C, like blowing a balloon, the plastic material 20injected from the material inlet 21 is blown evenly to the inner surface of the blow mold 10 forming a same shape of the blow mold 10.

While in applications, the aforesaid plastic material 20 can be High Density Polyethylene (HDPE), Poly Carbonate (PC), Polypropylene (PP) or other light and enduring plastic materials. Wherein the air, fluid or gas blown into the blow mold 10 can be pure air or nitrogen with the air pressure of at least 1 atm (1 atm = 76 cmHg = 1013 mb).

As shown in FIG. 1, FIG. 2A, FIG. 2B, FIG. 2C and FIG. 3A, forming a roof box (step S30), wherein the plastic material 20 evenly distributed on the inner surface of the blow mold 10 being cooled, the blow mold 10 being opened and the cooled plastic material 20 being fetched out the blow mold 10 and forming a roof box 30.

While in applications, the shape of the roof box 30 can be changed by using different shapes of blow mold 10. The roof box 30 made or formed by the production method of blow molding roof box S100 being one piece with no seam, is light in weight, having strong structural force, being completely water proof, requiring no fastening parts and therefore reducing enormously the production cost and the material cost.

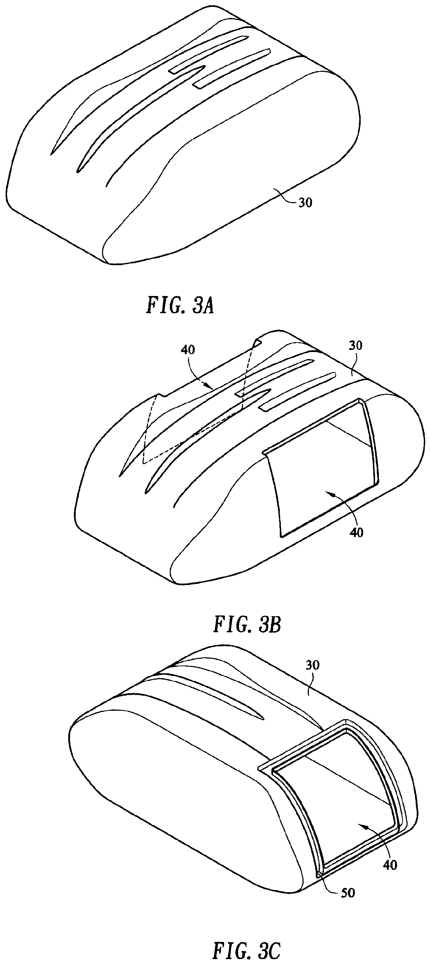

As shown in FIG. 1, FIG. 2B, FIG. 3B and FIG. 3C, forming access gate (step S40), wherein at least one access gate 40 being formed by cutting on at least one side 31 of the roof box 30 for fetching things from or putting things into the roof box 30. Wherein as shown in FIG. 3B and FIG. 3C, access gate 40 can be cutting formed on at least one of the left side, the right side or the back side of the roof box 30. While for the integrity of the roof box 30, the aforesaid blow inlet 22 can be formed on the blow mold 10 in the related position of the access gate 40.

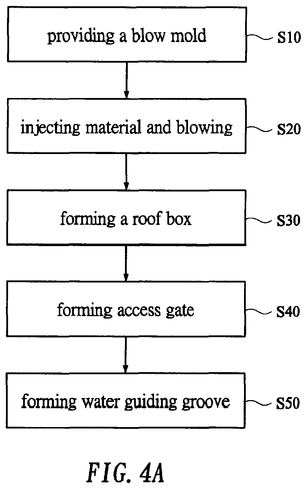

Please refer now to FIG. 3C and FIG. 4A, the production method of blow molding roof box S100 can further comprises a process step of forming water guiding groove (step S50), wherein at least one water guiding groove 50 being formed on the roof box 30 surface around the access gate 40. The water guiding groove 50 being having the effect of water preventing, water guiding, and enforcing the structural force of the roof box.

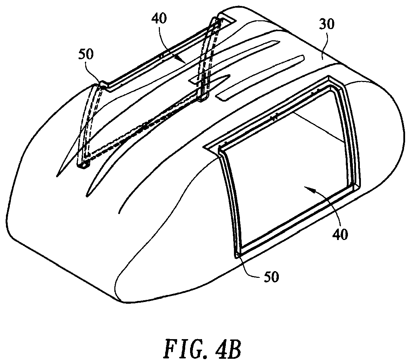

As shown in FIG. 4B, water guiding groove 50 being formed on the roof box 30 surface around the access gate 40, enforces the structural force of the roof box with the effect of water guiding.

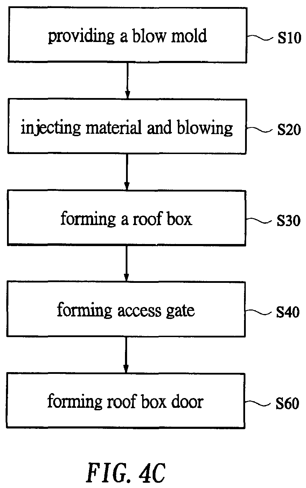

Please refer to FIG. 4C, the production method of blow molding roof box S100 can further comprises a process step of forming roof box door (step S60), wherein the roof box door 60 being formed on the roof box 30 covering the access gate 40.

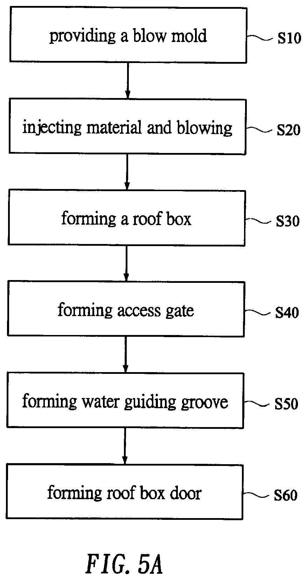

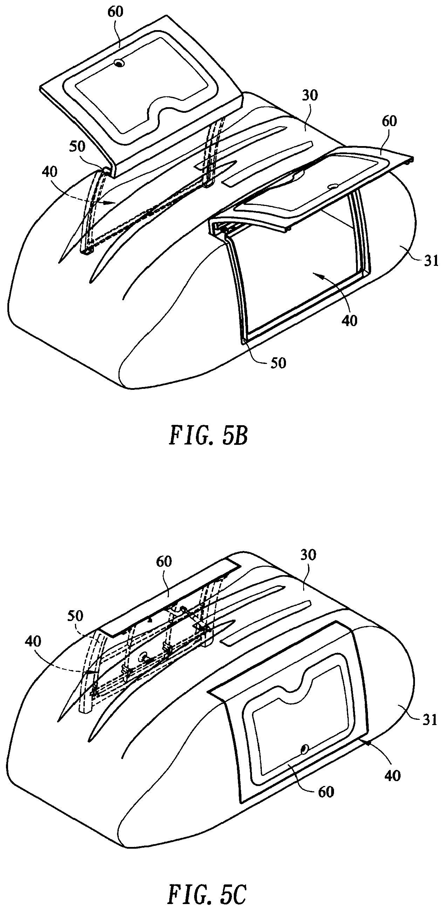

And as shown in FIG. 5A, FIG. 5B and FIG. 5C, the production method of blow molding roof box S100 can further comprises a process step of forming water guiding groove (step S50) and a process step of forming roof box door (step S60), thus the roof box 30 formed having water guiding groove 50 and roof box door 60 at the same time.

And thus, a part of the roof box door 60 being tightly inserted into the water guiding groove 50 when covering the access gate 40 making the whole roof box 30 completely water proof.

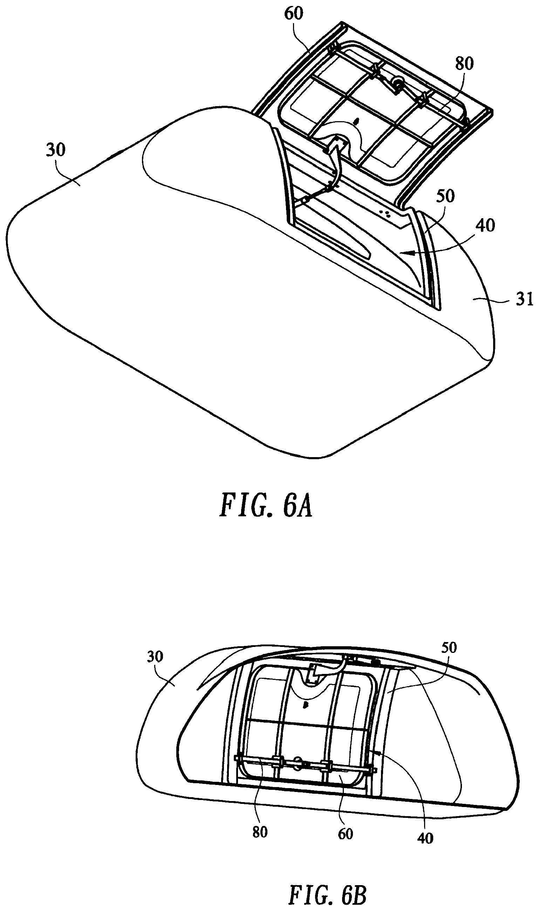

Moreover, as shown in FIG. 6A and FIG. 6B, a link lock 80 can be formed on or fixed to the roof box door 60, wherein the roof box door 60 can be locked on roof box 30 over the access gate 40 with the link lock 80.

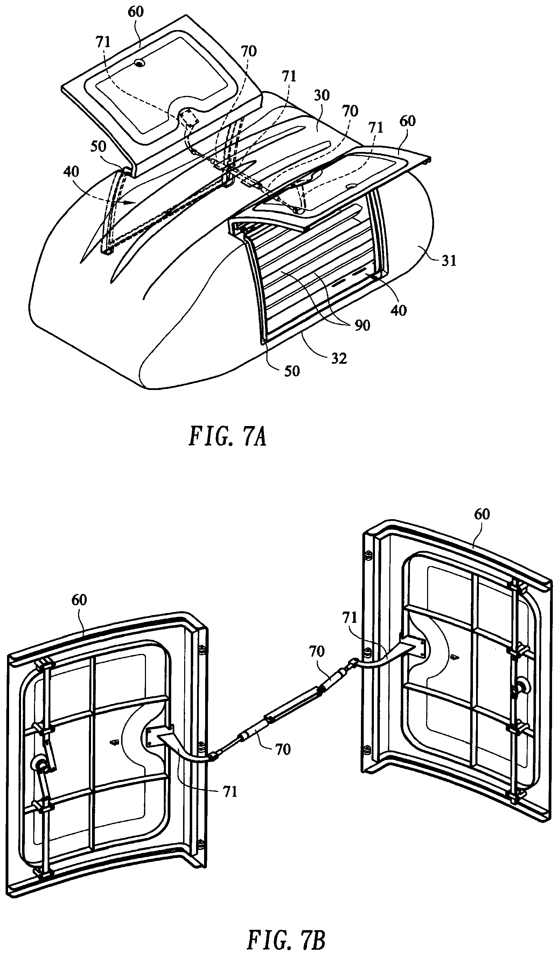

As shown in FIG. 7A and FIG. 7B, an air pump 70 can be combined or fixed to the roof box door 60, the roof box door 60 can then be smoothly opened or closed by using the air pressure of the air pump 70.

As shown in FIG. 7B, an air pump 70 is connected to each of the roof box doors 60 on either sides of the roof box 30, with these 2 air pumps 70 connected with a link rod 71 that is fixed to the roof box 30, the roof box doors 60 can be further stable in the right position.

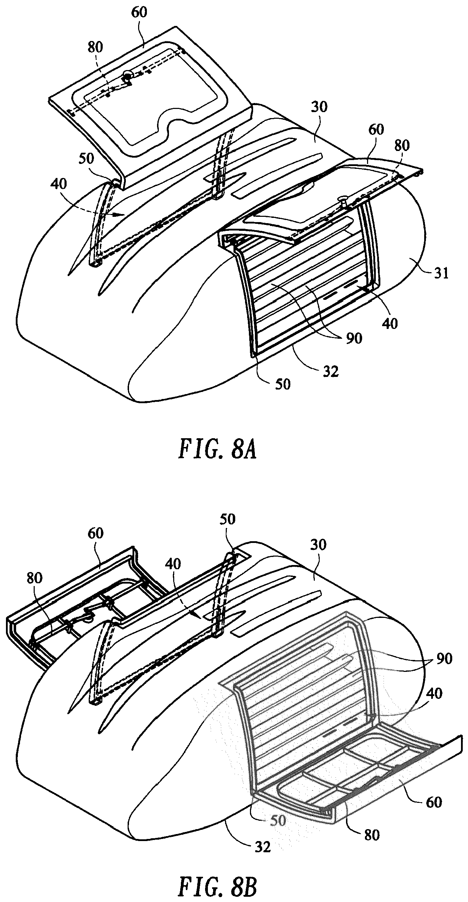

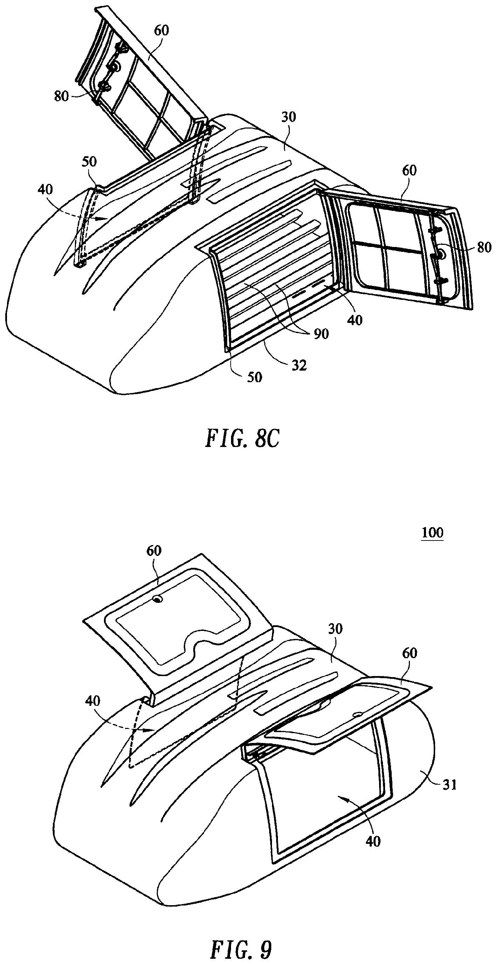

And as shown in FIG. 8A, FIG. 8B and FIG. 8C, the type of the roof box door 60 can be a top opening door, a below opening door or a sidewise opening door.

As also shown in FIG. 7A, FIG. 8A, FIG. 8B and FIG. 8C, to greatly improve the structural force and the endurance when high speed driving, at least one reinforcing rib 90 can be formed on the bottom side 32 of the roof box. 30.

Please refer now to FIG. 9, is an embodiment of a blow molding roof box structure 100, comprising: a roof box 30 formed by a production method of blow molding and at least one roof box door 60.

As shown in FIG. 9, one access gate 40 is formed on at least one side 31 of the roof box 30, wherein a roof box door 60 is fixed to the side 31 with the access gate 40 and covering the access gate 40.

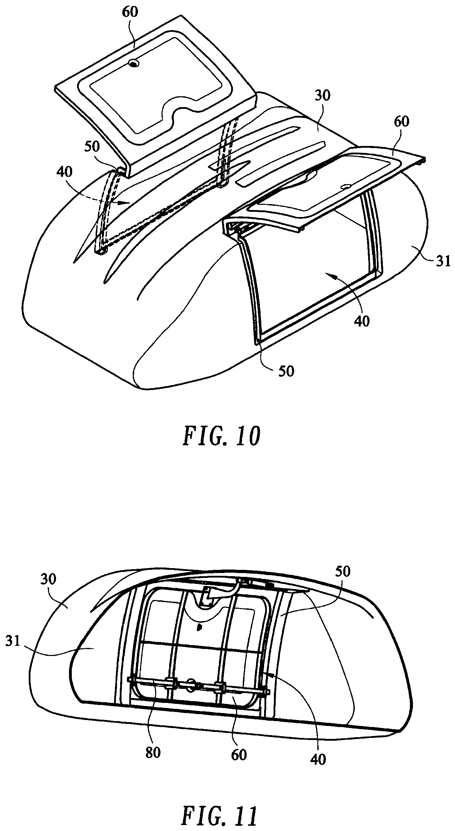

As shown in FIG. 10, at least one water guiding groove 50 can be formed on the roof box 30 surface around the access gate 40, wherein a part of the roof box door 60 can be tightly inserted into the water guiding groove 50 when covering the access gate 40 making the roof box 30 perfectly water tight.

And as shown in FIG. 11, the roof box door 60 can also be locked on the roof box 30 over the access gate 40 with a link lock 80.

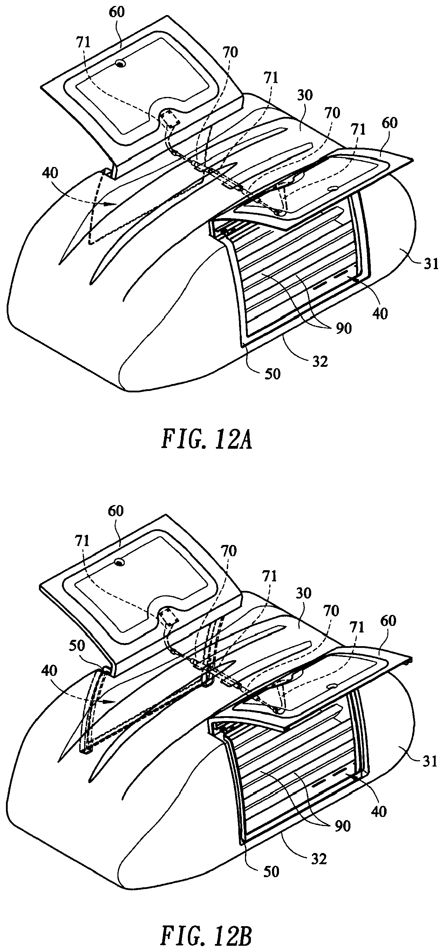

As shown in FIG. 12A and FIG. 12B, an air pump 70 can be connected to the roof box door 60, thus the roof box door 60 can be opened or closed smoothly by using the air pressure of the air pump 70. When there are two roof box doors 60 each on the two opposite sides 31 of the roof box 30, a link rod 71 can be applied to link the air pumps 70 of the roof box doors 60, with these 2 air pumps 70 connected with a link rod 71 that is fixed to the roof box 30, the roof box doors 60 can be further stable in the right position.

As also shown in FIG. 12A and FIG. 12B, at least one reinforcing rib 90 can be formed on the bottom side 32 of the blow molding roof box 30 to greatly improve the structural force and the endurance toward high speed driving of the roof box 30.

In conclusion, as indicated by the description of the aforesaid embodiments, the roof box 30 made or formed by the production method of blow molding roof box S100 or the blow molding roof box structure 100, feature firmly constructed and waterproof without combining portion; no fastening parts required with budget saving advantage; light weight for easy operating even by a single person; and capable of preventing separation of the roof box 30 to ensure the safety of driving of a vehicle with the roof box 30 on car top.

The embodiments described above are intended only to demonstrate the technical concept and features of the invention to enable a person skilled in the art to understand and implement the contents disclosed herein. It is understood that the disclosed embodiments are not to limit the scope of the invention. Therefore, all equivalent changes or modifications based on the concept of the invention should be encompassed by the appended claims.

## Claims

1. A production method of blow molding roof box (S100), comprising the following process steps:
providing a blow mold (S10), wherein the blow mold (10) being an openable three-dimensional blow mold having a material inlet (21) and a blow inlet (22);
injecting material and blowing (S20), wherein a plastic material (20) being injected through the material inlet (21) into the blow mold (10), and then a fluid being injected or blown into the blow mold (10) from the blow inlet (22) to make the plastic material (20) being evenly distributed upon the inner surface of the blow mold (10);
forming a roof box (S30), wherein the plastic material (20) evenly distributed on the inner surface of the blow mold (10) being cooled and fetched out the blow mold (10) and forming a roof box (30); and
forming access gate (S40), wherein at least one access gate (40) being formed by cutting on at least one side (31) of the roof box (30).

2. The production method (S100) of claim 1, further comprises a process step of forming water guiding groove (S50), wherein at least one water guiding groove (50) being formed on the roof box (30) surface around the access gate (40).

3. The production method (S100) of claim 1, further comprises a process step of forming roof box door (S60), wherein the roof box door (60) being formed on the roof box (10) openably covering the access gate (40).

4. The production method of claim 2, further comprises a process step of forming a roof box door (S60), wherein the roof box door (60) being formed on the roof box (30) openably covering the access gate (40), wherein a part of the roof box door (60) being tightly inserted into the water guiding groove (50) when covering the access gate (40).

5. The production method of claim 3, wherein an air pump (70) being connected to the roof box door (60), wherein the roof box door (60) being a top opening door, a below opening door or a sidewise opening door.

6. The production method of claim 4, wherein an air pump (70) being connected to the roof box door (60), wherein the roof box door (60) being a top opening door, a below opening door or a sidewise opening door.

7. The production method of claim 3, wherein the roof box door (60) being locked on roof box (30) over the access gate (40) with a link lock (80).

8. The production method of claim 4, wherein the roof box door (60) being locked on roof box (30) over the access gate (40) with a link lock (80).

9. The production method of claim 3, wherein at least one reinforcing rib (90) being formed on the bottom side (32) of the roof box (30).

10. The production method of claim 4, wherein at least one reinforcing rib (90) being formed on the bottom side (32) of the roof box (30).

11. A blow molding roof box structure (100), comprising:
a roof box (30) formed by a production method of blow molding, wherein at least one access gate (40) is formed by cutting on at least one side (31) of the roof box (30); and
at least one roof box door (60), wherein a roof box door (60) being openably combined and attached to the roof box (30) and covering each access gate (40).

12. The blow molding roof box structure (100) of claim 11, wherein at least one water guiding groove (50) being formed on the roof box (30) surface around the access gate (40), wherein a part of the roof box door (60) being tightly inserted into the water guiding groove (50) when covering the access gate (40).

13. The blow molding roof box structure (100) of claim 11, wherein the roof box door (60) being locked on roof box (30) over the access gate (40) with a link lock (80).

14. The blow molding roof box structure (100) of claim 11, wherein an air pump (70) being connected to the roof box door (60).

15. The blow molding roof box structure (100) of claim 11, wherein at least one reinforcing rib (90) being formed on the bottom side (32) of the blow molding roof box (30).
